# EUROPEAN PATENT APPLICATION

(11) **EP 2 352 101 A1**
(43) Date of publication of application: **03.08.2011**
(21) Application number: 09813999.1
(22) Date of filing: 22.07.2009
(51) Int. Cl.: G06F 17/30

(54) **DATA PROCESSING DEVICE AND PROCESSING METHOD OF WEB PAGE**

(30) Priority: 18.09.2008 CN 200810211312
(71) Applicant: ZTE Corporation, Shenzhen, Guangdong 518057 (CN)
(72) Inventor: KUANG, Yufeng, Guangdong 518057 (CN)
(74) Representative: Quinterno, Giuseppe
(86) International application number: PCT/CN2009/072875
(87) International publication number: WO 2010/031278

(57) **Abstract**

A device and method for processing data of a WEB page are provided, in which a service tag requests an instance tag to read a data object instance according to a service invoking request of the WEB page; the instance tag requests to update an object attribute value of the data object instance; a binding tag updates and returns the object attribute value of the data object instance to the service tag, and the service tag invokes a designated WEB service. Asynchronous data transmission and reception, and partial refreshing operation of the page can be realized according to the present invention.

## Description

### Field of the Invention

The present invention relates to the field of internet technologies, and especially to a device and a method for processing data of a WEB page.

### Background of the Invention

WEB application programs based on HTML pages become quite popular for the recent decade, because application systems established in this manner have low deployment costs and simple structures, and the HTML is easy to learn and use. Hence, many users and development staff are willing to give up the good user interface brought by a desktop application program and use the WEB application programs to realize data access.

However, with the fast development of internet technologies and IT technologies during recent years, the "Refresh-Wait" interaction response mode of traditional synchronization used by the WEB page cannot meet the increasingly growing personalized demands of the users, and especially some complex applications may require extracting web pages for multiple times to complete processing an affair, which will render that the interaction speed is so low that the users cannot accept it in some fields such as medicine and finance.

Users hope to obtain an experience of a quick response without refresh and wait in a browser as in the desktop application programs.

### Summary of the Invention

In view of the above analysis, the present invention aims at providing a device and a method for processing data of a WEB page to solve the problem in the prior art that the "Refresh-Wait" interaction response mode of the synchronization cannot meet the demands of the users.

According to one aspect of the present invention, a device for processing data of a WEB page is provided.

The device for processing data of a WEB page according to the present invention comprises:
a model tag, an instance tag, a binding tag and a service tag, wherein,
the service tag is configured to receive a service invoking request of a WEB page sent from a user, to extract, according to a service identifier in the service invoking request, a service request parameter corresponding to the service identifier, and to send a request to the instance tag for reading an object instance required by the service request parameter;
the instance tag is configured to declare the object instance that will be used when requesting to invoke service and returning the service, and to request the binding tag to update an object attribute value of the object instance when receiving from the service tag the request for reading the object instance;
the binding tag is configured to bind an object attribute declared by the instance tag with a control attribute, and to update the object attribute value of the object instance in the binding tag according to the binding relationship between the object attribute and the control attribute when the binding tag receives the request for updating the object attribute value; and
the model tag is configured to provide the instance tag with a data model used while creating an object instance for the first time.

When a service returning and processing function of the service tag is triggered by an event after a WEB service is returned, the service tag is further configured to deserialize a return value into the object instance declared by a user and to update the object attribute value in the instance tag;
after the object attribute value is updated by the service tag, the instance tag is further configured to request the binding tag to update a control attribute value; and
the binding tag is further configured to perform the operation of updating the control attribute value after receiving the request for updating the control attribute value.

The service tag is further configured to determine to display a progress bar or cancel the progress bar at a designated position according to the configuration of the user, and to determine whether to perform page jump according to the configuration of the user.

The binding tag is further configured to automatically perform data check and error prompt according to a data type check rule configured by a user before updating the object attribute value of the instance object.

According to another aspect of the present invention, a method for processing data of a WEB page is provided.

According to the method for processing data of a WEB page of the present invention, a model tag, an instance tag, a binding tag and a service tag are preconfigured in the WEB page, and the method comprises:
step A, the service tag send a request, according to a service invoking request of the WEB page sent from a user, to the instance tag for reading a data object instance required by a service request parameter;
step B, the instance tag requesting the binding tag to update an object attribute value of the data object instance according to the request from the service tag for reading the object;
step C, the binding tag updating the object attribute value of the data object instance in the binding tag according to the received request for updating the object attribute value; and
step D, the instance tag returning the updated data object instance to the service tag, the service tag invoking a designated WEB service according to the updated data object instance, and then service request being ended.

Preferably, step A specifically comprises:
the user inputting data in a control of the WEB page, triggering a service request event of the WEB page, and the service request event invoking a service by using a certain service identifier declared by the service tag as a parameter; and
in response to the service invoking request, the service tag extracting from the service tag a service request parameter corresponding to the service identifier and then requesting the instance tag to read each object required by the service request parameter.

Preferably, step B further comprises:
when the instance tag determines that the object instance is used for the first time according to the request from the service tag for reading the object, creating the object instance according to the definition of a data model in the model tag.

Preferably, in step C, the step of updating the object attribute value specifically comprises:
the binding tag sequentially reading attributes of objects; and
reading a bound control attribute value according to a user-defined binding relationship between an object attribute and a control attribute, and assigning the control attribute value to the object attribute.

Preferably, prior to executing step C, the method further comprises:
the binding tag automatically performing data check and error prompt according to a data type check rule configured by the user.

Preferably, step D further comprises:
after the service request is ended, if a progress bar is configured by the user, displaying the progress bar at a designated position.

Preferably, the above method for processing data of a WEB page further comprises:
step E, after the WEB service is returned, triggering a service returning and processing function of the service tag by an event, the service tag deserializing a return value into an instance declared by the user, and updating the object attribute value in the instance tag;
step F, after the object attribute value is updated by the service tag, the instance tag requesting the binding tag to update the control attribute value; and
step G, after receiving the request for updating the control attribute value, the binding tag performing the operation of updating the control attribute value.

Preferably, the above method for processing data of a WEB page further comprises:
step H, if a progress bar is configured by the user, canceling the display of the progress bar; if a condition of page jump is configured by the user, performing the operation of page jump in the case that the condition is met.

The present invention achieves the advantageous effects as follows.

Various complex functions and common operations can be encapsulated via a customized tag, thus users do not need to know specific technical details and can realize common and complex functions such as transmission and reception of asynchronous data, data automatic binding, and automatic and partial refresh of the WEB page and the like by only using the simple tag. The present invention has very low requirements on design staff of the WEB page, and is very fast and convenient and thus is suitable for highly efficient and large-scale development.

Other features and advantages of the present invention will be described in the following description and partly become obvious from the description, or be understood by implementing the present invention. The objects and other advantages of the present invention can be realized and obtained through the structures indicated by the description, claims and drawings.

### Brief Description of the Drawings

The drawings are used to provide further understanding of the present invention and constitute a part of the description, and are used to explain the present invention together with the embodiments thereof, and do not intend to restrict the present invention. In the drawings:
Figure 1 is a schematic diagram of an application structure of the device for processing data of a WEB page according to an embodiment of the present invention; and
Figure 2 is a schematic diagram of the flow of the method for processing data of a WEB page according to an embodiment of the present invention.

### Detailed Description of Embodiments

### Functional overview

The embodiments of the present invention are mainly realized via an original HTML customized tag having specific functions. The customized tag can encapsulate various complex functions and common operations, and users do not need to know any specific technical details and can realize common while complex functions such as transmission and reception of asynchronous data, data automatic binding and partial and automatic refresh of the WEB page by using the simple tag.

The preferable embodiments of the present invention will be described hereinafter in conjunction with the drawings, and it should be understood that the preferable embodiments described herein are just used to explain and describe the present invention and do not intend to restrict the same. The embodiments of the present invention and the features in the embodiments can be combined mutually if there is no conflict.

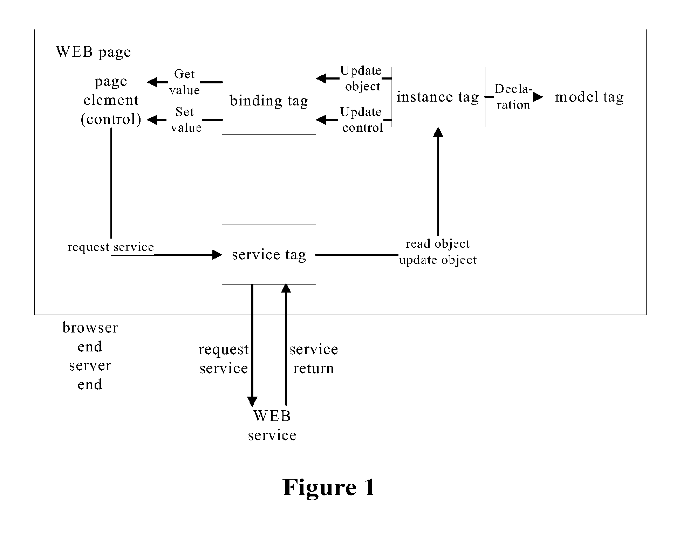

Firstly, a device provided by the embodiment of the present invention will be detailed in conjunction with Figure 1.

Figure 1 is a schematic diagram of the structure of the device for processing data of a WEB page according to the embodiment of the present invention. As shown in Figure 1, the device mainly comprises a model tag, an instance tag, a binding tag and a service tag, which will be described hereinafter.

The WEB page works at a browser end, a server end can provide WEB services via various protocols and data formats, and functional modules mainly work in the WEB page.

The WEB page exhibits data to users mainly via various forms of controls (such as textbox, button and table and the like) and constitutes a man-machine interaction interface. At the same time, the model tag, the instance tag, the binding tag and the service tag are embedded into the WEB page, and the functions provided by the tags are used to simply realize functions such as data request, data reception and partial data refresh and the like without "Refresh-Wait".

The service tag can be used by users to declare one remote WEB service in the WEB page, including declaring the identifier of the remote WEB service, parameters which need to be used by a service request (the object instance and variables declared by the data model), a return value of the service, whether to display the progress bar (synchronous or asynchronous), and setting a page jump condition. Use of the service tag can greatly lower the technical requirements for invoking the remote WEB service, and specific realization details such as remote communication do not need to be known.

When receiving a service invoking request of a WEB page sent by a user, the service tag extracts, according to a service identifier in the service invoking request, a service request parameter corresponding to the service identifier, and sends a request to the instance tag for reading an object instance required by the service request parameter; when a service returning and processing function of the service tag is triggered by an event after a WEB service is returned, the service tag deserializes a return value into the object instance declared by the user and updates the object attribute value in the instance tag, then the instance tag requests the binding tag to update a control attribute value, and the binding tag, after receiving the request for updating the control attribute value, performs the operation of updating the control attribute value.

The instance tag is mainly configured to declare the object instance that will be used when requesting the service and returning the service, and one data model can declare multiple instances which can be used in the same or different services. The service request or the returned object attribute value is stored and updated via the instances; when receiving from the service tag a request for reading the object instance, the instance tag requests the binding tag to update an object attribute value of the object instance.

The binding tag can be used by users to bind an object attribute declared by the instance tag with a control attribute. By creating a binding relationship between the object attribute and the control attribute, the bidirectional synchronization from the control attribute value to the object attribute value and from the object attribute value to the control attribute value can be realized; after receiving a request for updating object attribute value, the binding tag updates, according to the binding relationship between the object attribute and the control attribute, the object attribute value of the object instance in the binding tag.

In addition, before performing the synchronization from the control attribute value to the object attribute value, the binding tag can also automatically perform data check and error prompt according to a data type check rule configured by the user. By use of the binding tag, the user can avoid vast of heavy and highly repeated coding operations of assigning values to data, setting control values and data check.

The model tag is configured to provide the instance tag with a data model used while creating the object instance for the first time, that is, users can use the model tag to declare the data models involved when requesting a service or returning the service according to the format requirement of the service, wherein the data model mainly comprises the parameter of the request and the return value; the declaration of the data model comprises a model name, an attribute name, the data type of the attribute, a default value, and etc.

The specific implementation process of the device for processing data of a WEB page according to the embodiment of the present invention will be detailed in the following method and is omitted here.

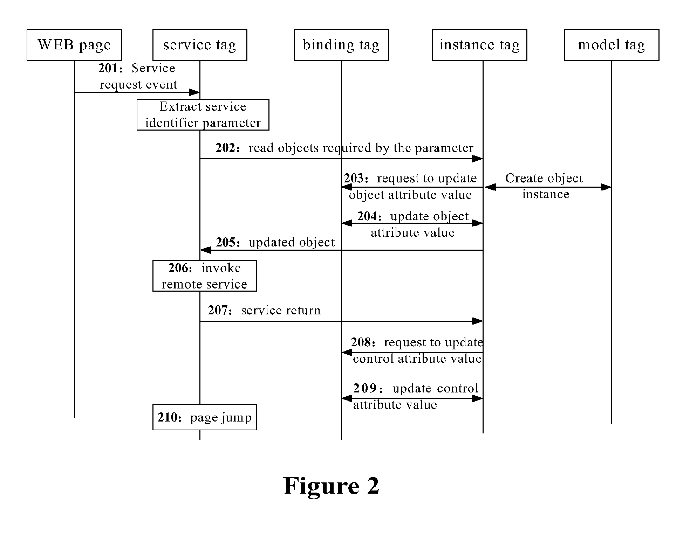

The method provided by the embodiment of the present invention will be detailed hereinafter in conjunction with Figure 2.

The method for processing data of a WEB page according to the embodiment of the present invention uses the device in Figure 1. Figure 2 is a schematic view of the flow of the method for processing data of a WEB page according to the embodiment of the present invention, and as shown in Figure 2, specifically, the method can comprise the following steps:
step 201, the user inputs data in control(s) of the WEB page such as a textbox and so on and clicks a button to trigger a service request event of the WEB page, wherein the service request event invokes a service using a certain service identifier declared by the service tag as a parameter. After sending the request, the user can continue to perform other interface operations and does not need to wait for the return of the service so as to perform other operations;
step 202, the service tag responds to a service invoking request of the WEB page, and extracts from the service tag a service request parameter corresponding to the service identifier and then sends a request to the instance tag for reading each data object instance (hereinafter referred to as object instance(s)) required by the service request parameter;
step 203, the instance tag receives the request for reading the object from the service tag and needs to acquire the latest object attribute value, and thus requests the binding tag to update the object attribute value. When the instance declared in the instance tag is used for the first time, the instance tag will create an instance according to the definition of the data model in the model tag;
step 204, the binding tag receives the request for updating the object attribute values, and sequentially reads each attribute of the object instance firstly, then reads a bound control attribute value and assigns the control attribute value to an object attribute according to a user-configured binding relationship between object attributes and control attributes, thus completing the operation of updating the object attribute values;
step 205, the instance tag returns the updated object instances to the service tag;
step 206, the service tag sequentially invokes the remote service designated by the user, and the service request ends;
wherein, if a progress bar is configured by the user, the progress bar is displayed at a designated position. As the user interface operation and the service request are processed using different threads, from the user' s point of view, the service request is asynchronous, and thus the users will not be in the state of waiting for the service return in which they cannot perform other interface operations.
step 207, after the WEB service is returned, the service returning and processing function of the service tag is triggered via an event, the service tag deserializes a return value to an object instance declared by the user, and updates the object attribute value of the object instance in the instance tag;
step 208, after the object attribute value is updated by the service tag, the instance tag requests the binding tag to update the control attribute value;
step 209, the binding tag receives the request for updating control attribute values, and sequentially reads the attributes of the updated objects firstly, and then sets, according to a user-configured binding relationship between object attributes and control attributes, a control attribute value bound with the object attribute, thus completes the operation of updating the control attribute value. If a progress bar is configured by the user, the display of the progress bar is canceled; and
step 210, if a condition of page jump is configured by the user, the service tag will compare the return value with the condition one by one, the operation of page jump is performed in the case that the condition is met, and a new HTML page is requested.

Functions of data request, data reception and automatic refresh of partial data without "Refresh-Wait" can be realized based on the above steps.

Compared with the prior art in the industry, the embodiments of the present invention uses a customized tag to encapsulate various common but complex functions such as transmission and reception of asynchronous data, data automatic binding and automatic and partial refresh of the WEB page and the like, and users will not waste time in boring waiting of page refresh when accessing to a WEB page constructed by this method, and the WEB page will perform data transmission and reception and partial refresh of the page while users are performing page operation and browsing. More importantly, developing a WEB page having the above characteristics using this method substantially does not require coding, and it is only necessary to use tags such as model, instance, binding and service in the WEB page and to perform necessary configuration of the attributes of the tags, which has very low requirements on design staff of the WEB page, and is fast and convenient and thus is suitable for highly efficient and large-scale development.

The descriptions above are only preferable embodiments of the present invention, which are not used to restrict the present invention. For those skilled in the art, the present invention may have various changes and variations. Any modifications, equivalent substitutions, improvements and etc. within the spirit and principle of the present invention shall all be included in the scope of protection of the present invention.

## Claims

1. A device for processing data of a WEB page, **characterized in that** the device comprises a model tag, an instance tag, a binding tag and a service tag, wherein ,
the service tag is configured to receive a service invoking request of a WEB page sent from a user, to extract, according to a service identifier in the service invoking request, a service request parameter corresponding to the service identifier, and to send a request to the instance tag for reading an object instance required by the service request parameter;
the instance tag is configured to declare the object instance that will be used when requesting to invoke service and returning the service, and to request the binding tag to update an object attribute value of the object instance when receiving from the service tag the request for reading the object instance;
the binding tag is configured to bind an object attribute declared by the instance tag with a control attribute, and to update the object attribute value of the object instance in the binding tag according to the binding relationship between the object attribute and the control attribute when the binding tag receives the request for updating the object attribute value; and
the model tag is configured to provide the instance tag with a data model used while creating an object instance for the first time.

2. The device according to claim 1, **characterized in that** when a service returning and processing function of the service tag is triggered by an event after a WEB service is returned, the service tag is further configured to deserialize a return value into the object instance declared by a user and to update the object attribute value in the instance tag;
after the object attribute value is updated by the service tag, the instance tag is further configured to request the binding tag to update a control attribute value; and
the binding tag is further configured to perform the operation of updating the control attribute value after receiving the request for updating the control attribute value.

3. The device according to claim 2, **characterized in that** the service tag is further configured to determine to display a progress bar or cancel the progress bar at a designated position according to the configuration of the user, and to determine whether to perform page jump according to the configuration of the user.

4. The device according to claim 1, **characterized in that** the binding tag is further configured to automatically perform data check and error prompt according to a data type check rule configured by a user before updating the object attribute value of the instance object.

5. A method for processing data of a WEB page, **characterized in that** a model tag, an instance tag, a binding tag and a service tag are preconfigured in the WEB page, and the method comprises:
step A, the service tag sending a request, according to a service invoking request of the WEB page sent from a user, to the instance tag for reading a data object instance required by a service request parameter;
step B, the instance tag requesting the binding tag to update an object attribute value of the data object instance according to the request from the service tag for reading the object;
step C, the binding tag updating the object attribute value of the data object instance in the binding tag according to the received request for updating the object attribute value; and
step D, the instance tag returning the updated data object instance to the service tag, the service tag invoking a designated WEB service according to the updated data object instance, and then service request being ended.

6. The method according to claim 5, **characterized in that** step A specifically comprises:
the user inputting data in a control of the WEB page, triggering a service request event of the WEB page, and the service request event invoking a service by using a certain service identifier declared by the service tag as a parameter; and
in response to the service invoking request, the service tag extracting from the service tag a service request parameter corresponding to the service identifier and then requesting the instance tag to read each object required by the service request parameter.

7. The method according to claim 5, **characterized in that** step B further comprises:
when the instance tag determines that the object instance is used for the first time according to the request from the service tag for reading the object, creating the object instance according to the definition of a data model in the model tag.

8. The method according to claim 5, **characterized in that** in step C, the step of updating the object attribute value specifically comprises:
the binding tag sequentially reading attributes of objects;
and
reading a bound control attribute value according to a user-defined binding relationship between an object attribute and a control attribute, and assigning the control attribute value to the object attribute.

9. The method according to claim 8, **characterized in that** prior to executing step C, the method further comprises:
the binding tag automatically performing data check and error prompt according to a data type check rule configured by the user.

10. The method according to claim 5, **characterized in that** step D further comprises:
after the service request is ended, if a progress bar is configured by the user, displaying the progress bar at a designated position.

11. The method according to any of claims 5 to 10, **characterized in that** the method further comprises:
step E, after the WEB service is returned, triggering a service returning and processing function of the service tag by an event, the service tag deserializing a return value into an instance declared by the user, and updating the object attribute value in the instance tag;
step F, after the object attribute value is updated by the service tag, the instance tag requesting the binding tag to update the control attribute value; and
step G, after receiving the request for updating the control attribute value, the binding tag performing the operation of updating the control attribute value.

12. The method according to claim 10, **characterized in that** the method further comprises:
step H, if a progress bar is configured by the user, canceling the display of the progress bar; if a condition of page jump is configured by the user, performing the operation of page jump in the case that the condition is met.
